(19) Europäisches Patentamt
European Patent Office
Office européen des brevets

(11) EP 0 523 582 B1

(12) # EUROPÄISCHE PATENTSCHRIFT

(45) Veröffentlichungstag und Bekanntmachung des Hinweises auf die Patenterteilung:
**14.10.1998 Patentblatt 1998/42**

(51) Int. Cl.$^6$: **C07F 9/6561**

(21) Anmeldenummer: **92111860.0**

(22) Anmeldetag: **11.07.1992**

(54) **Verbessertes Verfahren zur Herstellung des Mononatriumsalzes von Riboflavin 5'-phosphat**

Improved process for preparing riboflavin 5'-phosphate ester monosodium salt

Procédé amélioré pour préparer le mono sel de sodium du phosphate de riboflavine-5'

(84) Benannte Vertragsstaaten:
**CH DE FR GB IT LI NL**

(30) Priorität: **19.07.1991 DE 4123993**

(43) Veröffentlichungstag der Anmeldung:
**20.01.1993 Patentblatt 1993/03**

(73) Patentinhaber:
**BASF Aktiengesellschaft**
**67063 Ludwigshafen (DE)**

(72) Erfinder:
- **Borch Christensen, Kurt**
  **DK-8400 Ebeltoft (DK)**
- **Jensen,-Dahm, Lars**
  **DK-8500 Grenaa (DK)**
- **Christensen, Svend E.**
  **DK-8210 Arhus V (DK)**
- **Grimmer, Johannes**
  **W-6700 Ludwigshafen (DE)**
- **Kiefer, Hans, Dr.**
  **W-6730 Neustadt 14 (DE)**

(56) Entgegenhaltungen:
**EP-A- 0 336 214** **EP-A- 0 417 604**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 523 582 B1

## Beschreibung

Die Erfindung betrifft ein verbessertes Verfahren zur Herstellung des handelsüblichen Mononatriumsalzes von Riboflavin-5'-phosphat (5'-Flavin-mononucleotid-natriumsalz und daher nachfolgend als Natrium-5'-FMN bezeichnet) der Formel I

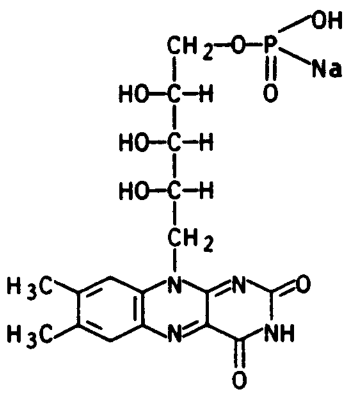

(I).

5'-FMN ist eine Verbindung, die eine wesentliche Rolle als Coenzym in verschiedenen Enzymreaktionen im lebenden Körper spielt und die deshalb in Form ihrer Salze, insbesondere in Form von Natrium-5'-FMN, als Zusatz für Arzneimittel, Nahrungsmittel und Futterstoffe verwendet wird. Natrium-5'-FMN dient auch als Ausgangsmaterial für Flavin-adenin-dinukleotid, das als therapeutisches Mittel gegen Vitamin-$B_2$-Mangel eingesetzt wird.

Das Natrium-5'-FMN wird im allgemeinen durch direktes Umsetzen von Riboflavin mit einem Phosphorylierungsmittel, wie partiell hydrolysiertem Phosphoroxichlorid oder Phosphoroxichlorid in einem organischen Lösungsmittel und anschließende Teilneutralisation mit wäßriger Natronlauge hergestellt. Die selektive Phosphorylierung ist nicht einfach. So arbeitet man beispielsweise gemäß US-2 610 177 mit einem etwa 20fachen molaren Überschuß an partiell hydrolysiertem Phosphoroxichlorid. Nachteilig an diesem Verfahren ist neben der Verwendung so großer Mengen an Phosphoroxichlorid und der damit verbundenen Umweltbelastung, daß das erhaltene Reaktionsprodukt noch erhebliche Mengen an unumgesetztem Riboflavin, sowie isomere Mono- und Polyphosphate als Nebenprodukte enthält. Daher muß das 5'-FMN einer technisch sehr aufwendigen Reinigungsprozedur unterworfen werden, damit Produkte erhalten werden, die den Reinheitskriterien der US- und der JP-Pharmakopoen entsprechen. Hierzu wird das erhaltene Rohprodukt durch mehrmalige Behandlung mit Ethanolamin oder Morpholin in Form von Monoammoniumsalzen in Lösung gebracht und von nicht umgesetztem und ungelöstem Riboflavin abgetrennt. Diese Reinigungsoperation wird auch in Chemical Engineering, Nov. 1954, Seiten 120 ff. beschrieben.

Gemäß US 2 111 491 erfolgt die Phosphorylierung mit $POCl_3$ in einem sehr großen Überschuß an Pyridin. Nachteilig an diesem Verfahren ist neben dem Einsatz so großer Mengen des giftigen und durch seinen unangenehmen Geruch nicht gern verwendeten Pyridins, daß das Produkt nicht rein und die Aufarbeitung sehr aufwendig ist.

In C.A. 83(1975) 79549f; 79550z und 79551a (JP-OS 25597/1975; JP-OS 25598/1975 bzw. JP-OS 25596/1975) wird die Phosphorylierung von Riboflavin mit einem geringen Überschuß an $POCl_3$ in Lösungsmitteln, wie Tetrahydrofuran, Diethylenglykoldimethylether, Monoethylenglykoldimethylether, Triethylphosphat, 1,2-Dichlorethan oder 1,2-Dibrom-ethan beschrieben. Bei der Nacharbeitung der genannten Verfahren stellte sich heraus, daß das 5'-FMN unter den in loc. cit. angegebenen Reaktionsbedingungen überhaupt nicht oder in nur geringen Mengen gebildet wird. Daß in loc. cit. hohe Ausbeuten an 5'FMN angegeben werden beruht vermutlich auf einem Irrtum, bedingt durch die zu der Zeit noch sehr problematische Analytik dieser Verbindungsklasse.

Allein an den aufwendigen Verfahrensschritten und darüber hinaus dem Einsatz von großen Mengen Phosphoroxichlorid in Bezug auf das zu phosphorylierende Riboflavin (Vitamin $B_2$) ist erkennbar, daß solche Verfahren einen nicht unerheblichen Einfluß auf die Chloridbelastung im Abwasser darstellen können. Auch bei Reinigungsverfahren für Vitamin-$B_2$-Phosphat durch Absorption an einem Celluloseionenaustauscher und Elution mit einem Natriumoxalat/Oxalsäure bzw. Ammoniumformiat/Ameisensäurepuffer (vgl. JA-AS 47/8836 und JA-AS 47/8554) wird das Verfahren nicht wirtschaftlicher und umweltfreundlicher, da bei technischer Nutzung zu große Mengen an Puffersalzen zur Anwendung kommen.

Wesentlich vorteilhafter gestaltet sich das Verfahren gemäß DE-A-39 30 668. In dieser DE-A wird ein verbessertes Verfahren zur Herstellung von Natrium-5'-FMN beschrieben, bei dem Riboflavin mit nur etwa zweifachem Überschuß an Phosphoroxichlorid in einem organischen Lösungsmittel aus der Stoffklasse der Lactone, insbesondere γ-Butyrolacton, umgesetzt wird, wonach das dabei gebildete Riboflavin-4',5'-cyclophosphorsäureesterchlorid durch Eingiessen in Wasser bei 70 bis 90°C hydrolysiert wird. Nach 5 bis 15 Minuten wird das Reaktionsgemisch auf Raumtemperatur abgekühlt und anschließend aus dem gebildeten 5'-FMN durch Zugabe von wäßrigem Natriumhydroxid bis zu einem pH-Wert von 5,5 bis 6,0 das Natrium-5'-FMN hergestellt. Das so erhaltene Natrium-5'-FMN wird anschließend abgetrennt und getrocknet oder angeteigt und sprühgetrocknet. Sehr vorteilhaft an diesem Verfahren ist, daß man auf einfache Weise und in befriedigenden Ausbeuten unmittelbar ein Produkt erhält, das den Anforderungen der US-Pharmakopoe und anderer Pharmakopoen entspricht. Nachteilig an diesem Verfahren ist indessen, wie bei anderen bekannten Verfahren, daß das Natrium-5'-FMN bei dieser Verfahrensweise in äußerst feinkristalliner Form ausfällt und deshalb sehr schwierig abzutrennen und rein zu waschen ist und beim Trocknen ein Produkt ergibt, dessen unvorteilhafte Handlingseigenschaften die praktische Anwendung außerordentlich erschweren. Deshalb muß das Produkt sprühgetrocknet oder anderen aufwendigen und mühsamen Verfahren unterworfen werden, um ein Produkt zu erhalten, das einfach zu handhaben ist.

Es war daher die Aufgabe der Erfindung, die bekannten Verfahren zur Herstellung von 5'-FMN-Natriumsalz und insbesondere das an sich vorteilhafte Verfahren gemäß DE-A-39 30 668 so zu verbessern, daß dabei ein Natrium-5'-FMN in Form von leichtfiltrierbaren grobkristallinen Partikeln anfällt und das außerdem den Reinheitsanforderungen an Pharmaware entspricht.

Es wurde nun überraschenderweise gefunden, daß man ein grobkristallines und daher leicht waschbares und abtrennbares Natrium-5'-FMN erhält, das bei einfacher Isolierung den strengen Anforderungen der Pharmacopoen entspricht, wenn man das bei der Phosphorylierung von Riboflavin und anschließender Hydrolyse anfallende heiße Reaktionsgemisch bei Temperaturen zwischen 55 und 100°C, d.h. bei Temperaturen, bei denen 5'-FMN in dem Reaktionsgemisch völlig gelöst ist, mit einer Natrium enthaltenden Base, vorzugsweise Natriumhydroxid auf einen pH-Wert zwischen 4,0 und 6,0 einstellt.

Gemäß dem Stand der Technik wurde das bei der Phosphorylierung von Riboflavin und anschließender Hydrolyse erhaltene Reaktionsgemisch vor der Neutralisation immer auf Raumtemperatur abgekühlt, weil bekannt ist, daß 5'-FMN zwar in saurem Milieu, d.h. bei extrem niedrigen pH-Werten relativ stabil ist, jedoch bei pH-Werten nahe dem Neutralpunkt eine erhebliche Rückspaltung von 5'-FMN zu freiem Riboflavin stattfindet. Da diese Rückspaltung bei höheren Temperaturen schneller verläuft als bei Raumtemperatur, war zu erwarten, daß bei Neutralisation des bei der Hydrolyse erhaltenen Reaktionsgemisches bei höheren Temperaturen ein stark mit Riboflavin verunreinigtes Natrium-5'-FMN erhalten würde, was aufgrund des hohen Riboflavingehaltes nicht den Anforderungen der Pharmacopoen entsprechen würde. Eine erforderliche nachträgliche Reinigung von Natrium-5'-FMN wäre aber sehr aufwendig, wie entsprechenden Arbeiten in Chemical Engineering 1954, Seiten 120f sowie den Ausführungen in DE-A-38 10 957 zu entnehmen ist.

Gegenstand der Erfindung ist ein verbessertes Verfahren zur Herstellung von leicht filtrierbarem, grobkristallinem Riboflavin-5'-phosphat-mononatriumsalz durch Umsetzen von Riboflavin oder seinem Natriumsalz mit überschüssigem Phosphoroxichlorid in einem geeigneten organischen Lösungsmittel aus der Stoffklasse der Lactone, insbesondere γ-Butyrolacton, Hydrolysieren des erhaltenen Reaktionsgemisches durch Behandeln mit Wasser bei erhöhter Temperatur, Umsetzen des bei der Hydrolyse erhaltenen Reaktionsgemisches mit einer Natrium enthaltenden Base bis zu einem pH-Wert von 4,0 bis 6,0, vorzugsweise 4,5 bis 5,0 und Isolieren des auskristallisierenden Natrium-5'-FMN, das dadurch gekennzeichnet ist, daß man das bei der Hydrolyse erhaltene Reaktionsgemisch bei Temperaturen von 55 bis 100°C mit der Natrium enthaltenden Base umsetzt, wobei das umzusetzende Riboflavin-5'-phosphat völlig im Reaktionsgemisch gelöst ist.

Hierzu sind im allgemeinen Temperaturen zwischen 55 und 100°C, vorzugsweise zwischen 70 und 90°C notwendig.

Als Natrium enthaltende Base können beispielsweise Natriumhydroxid, Natriumoxide mit 1 bis 4 C-Atomen, Natriumcarbonat oder Natriumbicarbonat verwendet werden. Mit besonderem Vorteil arbeitet man mit dem preisgünstigen Natriumhydroxid in Form einer wäßrigen oder alkoholischen Lösung.

Die Base wird im Reaktionsgemisch in solchen Mengen verwendet, daß der pH-Wert des Reaktionsgemisches 4,0 bis 6,0 vorzugsweise 4,5 bis 5,0 beträgt.

Die Phosphorylierung von Riboflavin oder dessen Alkalisalz erfolgt im allgemeinen gemäß den in DE-A-39 30 668 bzw. DE-A-38 35 563 beschriebenen Verfahren. Mit besonderem Vorteil arbeitet man gemäß dem Verfahren der DE-A-39 30 668, d.h. man phosphoryliert das Riboflavin durch Umsetzen mit 1,2 bis 3 mol Phosphoroxichlorid pro mol Riboflavin in einem Lacton, vorzugsweise in γ-Butyrolacton, bei 20 bis 50°C, vorzugsweise 30 bis 35°C, wobei man das Lacton in Mengen von 1 bis 3 l, vorzugsweise 1 bis 1,5 l pro mol Riboflavin eingesetzt.

Die anschließende Hydrolyse des Reaktionsgemisches unter Bildung von 5'-FMN kann auf verschiedene Weise diskontinuierlich oder kontinuierlich erfolgen.

Zur diskontinuierlichen Verfahrensweise wird beispielsweise das bei der Phosphorylierung erhaltene Reaktionsgemisch unter Einleiten von Dampf und langsamer Zugabe von vollentsalztem Wasser auf eine Temperatur von 85 bis 90°C erwärmt und anschließend noch etwa 5 bis 20, vorzugsweise etwa 10 - 15 Minuten auf Temperaturen von 85 bis 95°C gehalten.

Die hierbei verwendete Wassermenge beträgt im allgemeinen 20 bis 50 mol, vorzugsweise 25 bis 30 mol pro mol eingesetztem Riboflavin.

Eine weitere Variante der Hydrolyse ist dadurch gekennzeichnet, daß man das bei der Phosphorylierung erhaltene Reaktionsgemisch kontinuierlich so in etwa 90 bis 150 mol, 80 bis 100°C heißen Wassers pro mol Riboflavin einträgt, daß die Temperatur des Reaktionsgemisches zwischen etwa 80 und 95°C liegt und man das Reaktionsgemisch noch 1 bis 10 Minuten bei dieser Temperatur hält.

Ganz besonders vorteilhaft gestaltet sich diese Variante, wenn man das bei der Phosphorylierung erhaltene Reaktionsgemisch kurzzeitig auf Temperaturen von 40 bis 65°C, vorzugweise 55 bis 60°C erwärmt bevor man es in das heiße Wasser einträgt.

Bei einer weiteren vorteilhaften Variante des Hydrolyseschrittes wird das bei der Phosphorylierung erhaltene Reaktionsgemisch mit Wasser im Verhältnis von 30 bis 150 mol Wasser/mol Riboflavin in einem beheizten Mischgefäß zusammengebracht und noch etwa 5 bis 15 Minuten bei Temperaturen zwischen 80 und 95°C belassen.

Bei der Durchführung des Hydrolyseschrittes ist darauf zu achten, daß das bei der Phosphorylierung anfallende Reaktionsgemisch möglichst schnell auf Temperaturen von 80 bis 95°C gelangt und die Temperatur für die angegebene Zeit ohne zwischenzeitliches Absinken der Temperatur bei 80 bis 95°C gehalten wird, da sonst ein Produkt mit unakzeptabel hohem Riboflavingehalt erhalten wird. Weiterhin sollte das Reaktionsgemisch möglichst nicht länger als 10 min auf Temperaturen von 95°C gehalten werden. Bei längerem Erhitzen sollten maximal Temperaturen von 90°C angewendet werden.

Für das erfindungsgemäße Verfahren ist wesentlich, daß die Umsetzung des 5'-FMN bzw. des durch Phosphorylierung von Riboflavin mit Phosphoroxichlorid in einem Lösungsmittel und anschließender Hydrolyse erhaltene Reaktionsgemisches mit der Natrium enthaltenden Base bei Temperaturen erfolgt, bei denen das 5'-FMN völlig gelöst im Reaktionsgemisch vorliegt. Das ist bei Temperaturen oberhalb von 50°C, vorzugsweise bei 55 bis 100°C, insbesondere 70 bis 90°C der Fall.

Bei Temperaturen oberhalb von 90°C ist das Natrium-5'-FMN genau wie 5'-FMN selbst völlig gelöst und wird nur durch Abkühlung ausgefällt. Beim Arbeiten zwischen 50 und 90°C kristallisiert das Natriumsalz teilweise gleich bei der Salzbildung, teilweise erst durch Abkühlung nach der Teilneutralisation vollständig aus.

Das erfindungsgemäß hergestellte Natrium-5'-FMN zeichnet sich durch sehr günstige Filtereigenschaften und gute Reinheit aus.

Die Filtereigenschaften können durch eine Bestimmung des Filterwiderstandes nach folgender Formel ausgedruckt werden:

$$\text{Filterwiderstand} = \frac{2 \times t \times A \times P}{h \times V} \times 10^{13}$$

wobei t = Filterdauer in Sekunden, A = Filterfläche in $cm^2$, P = Filterdruck in bar, h = Höhe des Filterkuchens in mm und V = Filtervorlumen in ml bedeuten. Ein Filterwiderstand von $10^{11}$ wird als außerordentlich gut trennend und von $10^{15}$ als äußerst schwierig trennend bezeichnet.

Bei Teilneutralisation von 5'-FMN bei Temperaturen niedriger als 40°C bekommt man ein Produkt mit einem Filterwiderstand von ca. $7 \times 10^{14}$ und einem Trockenstoffgehalt in dem feuchten Filterkuchen von ca. 30 - 35 %.

Bei Teilneutralisation von 5'-FMN bei Temperaturen über 60°C bekommt man einen Filterwiderstand von nur ca. $6 \times 10^{12}$ und einen Trockenstoffgehalt in dem feuchten Filterkuchen von ca. 50 bis 55 %.

Die gemäß dem erfindungsgemäßen Verfahren erhaltenen Natrium-5'-FMN-Kristalle weisen eine Korngrößenverteilung auf, bei der nur 3 % der Kristalle kleiner als 75 µm sind.

Mit Hilfe des erfindungsgemäßen Verfahrens kann das durch Phosphorylierung von Riboflavin, anschließende Hydrolyse des Reaktionsgemisches und Teilneutralisieren des erhaltenen 5'-FMN erhaltenes Natrium-5'-FMN weitgehend rein von Riboflavin und in grobkristalliner und daher leicht filtrierbarer und leicht handhabbarer Form erhalten werden.

Beispiel 1

A. Herstellung einer 70°C warmen Lösung von Riboflavin-5'-phosphat

In einem 1 l-Kolben wurden jeweils 120 g Vitamin B2 (Pharmaware = 0,32 mol) in 400 ml γ-Butyrolacton suspendiert. Hierzu wurden langsam tropfenweise 120 g (0,78 mol) Phosphoroxichlorid addiert. Danach wurde das Reaktionsgemisch auf 35 bis 37°C erwärmt und bei dieser Temperatur 1 Stunde (h) gerührt. Nach ca. 30 Minuten (min) war das Reaktionsgemisch eine dunkle homogene Lösung. Anschließend wurde die Lösung in einen 2-l-Kolben mit 120 ml 70°C warmem, voll entsalztem Wasser gepumpt, wobei die Temperatur auf 90 bis 95°C stieg. Das Reaktionsgemisch

wurde bei dieser Temperatur 5-10 min gerührt.

B. Herstellung von dem Mononatriumsalz von Riboflavin-5'-phosphat

Der gemäß Beispiel 1A erhaltenen Lösung von Riboflavin-5'-phosphat wurde bei dieser Temperatur von 90 bis 95°C soviel einer 25 %igen wäßrigen Natronlauge zugefügt, daß der pH-Wert der Lösung bei 5,5 lag. Danach wurde das Reaktionsgemisch mit einem Wasserbad auf Raumtemperatur (RT) abgekühlt. Bei ca. 85 bis 90°C fing das Riboflavin-5'-phosphat-Natrium (FMN-Na) an auszukristallisieren. Nach Abkühlen auf 20°C wurde über eine G1-Glasfritte das Riboflavin-5'-phosphat-Natriumsalz abgetrennt und durch Waschen mit 900 ml eines Methanol/Wasser (70/30)-Gemisches und anschließend mit 600 ml reinem Methanol von Nebenprodukten befreit und im Vakuumtrockenschrank bei 30°C und 125 mbar getrocknet. Die Ausbeute betrug 120,4 g (entsprechend 78,9 % der Theorie) an einem Produkt mit einer durchschnittlichen Teilchengröße von 133 µm. Das Produkt hatte gemäß Untersuchung mittels HPLC (ohne Berücksichtigung des Kristallwassers) folgende Zusammensetzung:

| | |
|---|---|
| 1,3 % | Riboflavin 3',5'-diphosphat |
| 2,2 % | Riboflavin 4',5'-diphosphat |
| 5,1 % | Riboflavin 3'-monophosphat |
| 10,2 % | Riboflavin 4'-monophosphat |
| 71,7 % | Riboflavin 5'-monophosphat |
| 2,6 % | freies Riboflavin |
| 6,9 % | Wasser (nach Karl-Fischer) |

Beispiel 2

Eine entsprechend Beispiel 1A hergestellte Lösung von Riboflavin-5'-phosphat wurde bei 60-65°C mit so viel einer methanolischen NaOH-Lösung versetzt, daß der pH-Wert 4,5 betrug. Das dabei gebildete Natriumsalz von Riboflavin-5'-phosphat begann bei etwa einem pH-Wert von 2,0 an zu kristallisieren. Nach Abkühlen auf RT wurde analog Beispiel 1B abgetrennt und gewaschen.

Man erhielt 130 g (entsprechend 85,2 % der Theorie) eines Produktes mit einer durchschnittlichen Teilchengröße von 145 µm.

Das Produkt wurde analog Beispiel 1 untersucht und zeigte folgende Zusammensetzung:

| | |
|---|---|
| 2,3 % | Riboflavin 3',5'-diphosphat |
| 2,5 % | Riboflavin 4',5'-diphosphat |
| 5,1 % | Riboflavin 3'-monophosphat |
| 10,0 % | Riboflavin 4'-monophosphat |
| 71,2 % | Riboflavin 5'-monophosphat |
| 2,1 % | freies Riboflavin |
| 6,8 % | Wasser |

Beispiel 3

Eine entsprechend Beispiel 1A hergestellte Lösung von Riboflavin-5'-phosphat wurde gleichzeitig mit einer 25 %igen wäßrigen Natronlauge so in einen 2-l-Kolben enthaltend 160 ml VE-Wasser eingetragen, daß ein pH-Wert von 4,5 aufrechterhalten wurde. Bei 85 bis 90°C begann das Riboflavin-5'-phosphat-Natriumsalz zu kristallisieren. Nach Abkühlen auf RT wurde das Kristallisat analog Beispiel 1B abgetrennt, gewaschen und getrocknet.

Man erhielt 109,6 g (entsprechend etwa 71,8 % der Theorie) eines Produktes mit einer durchschnittlichen Teilchengröße von 109 µm.

Das Produkt wurde analog Beispiel 1 untersucht und hatte folgende Zusammensetzung:

| | |
|---|---|
| 1,4 % | Riboflavin 3',5'-diphosphat |
| 2,3 % | Riboflavin 4',5'-diphosphat |
| 4,9 % | Riboflavin 3'-monophosphat |
| 11,3 % | Riboflavin 4'-monophosphat |
| 69,8 % | Riboflavin 5'-monophosphat |
| 3,3 % | freies Riboflavin |
| 7,0 % | Wasser |

Beispiel 4

Eine entsprechend Beispiel 1A hergestellte Lösung von Riboflavin-5'-phosphat wurde gleichzeitig mit einer methanolischen Lösung von NaOH analog Beispiel 3 in 160 ml VE-Wasser eingetragen, daß in dem sich bildenden Gemisch ein pH-Wert von 4,5 und Temperaturen von etwa 60 bis 65°C aufrechterhalten wurden. Das Riboflavin-5'-phosphat-Natriumsalz begann auszukristallisieren. Nach Abkühlung auf RT wurde das Kristallisat analog Beispiel 1B abgetrennt, gewaschen und getrocknet. Man erhielt 124,6 g (entsprechend 81,7 % der Theorie) an einem Produkt mit einer durchschnittlichen Teilchengröße von 108 µm.

Das Produkt wurde analog Beispiel 1 untersucht und hatte folgende Zusammensetzung:

| | |
|---|---|
| 2,4 % | Riboflavin 3',5'-diphosphat |
| 2,6 % | Riboflavin 4',5'-diphosphat |
| 5,2 % | Riboflavin 3'-monophosphat |
| 9,5 % | Riboflavin 4'-monophosphat |
| 70,8 % | Riboflavin 5'-monophosphat |
| 2,3 % | freies Riboflavin |
| 7,2 % | Wasser |

Beispiel 5

Eine gemäß Beispiel 1A hergestellte Lösung von Riboflavin-5'-phosphat wurde bei 95°C mit kristallinem $Na_2CO_3$ auf einen pH-Wert von 4,5 eingestellt. Bei Abkühlung auf etwa 85 bis 90°C begann das Natriumsalz von Riboflavin-5'-phosphat auszukristallisieren. Nach Abkühlen auf RT wurde das Produkt analog Beispiel 1B abgetrennt, gewaschen und getrocknet.

Man erhielt 116,8 g (entsprechend 76,7 % der Theorie) an einem Produkt mit einer durchschnittlichen Teilchengröße von 86 µm. Das Produkt wurde analog Beispiel 1B untersucht und zeigte folgende Zusammensetzung:

| | |
|---|---|
| 2,2 % | Riboflavin 3',5'-diphosphat |
| 2,4 % | Riboflavin 4',5'-diphosphat |
| 5,5 % | Riboflavin 3'-monophosphat |
| 10,7 % | Riboflavin 4'-monophosphat |
| 69,3 % | Riboflavin 5'-monophosphat |
| 3,0 % | freies Riboflavin |
| 6,9 % | Wasser |

Vergleichsbeispiel

Eine gemäß Beispiel 1A hergestellte Lösung von Riboflavin-5'-phosphat in 960 ml VE-Wasser anstelle von 120 ml wurde im Wasserbad bis unter 40°C abgekühlt. Bei 55°C begann das Riboflavin-5'-phosphat auszukristallisieren. Nach Abkühlung wurde der pH mit wäßriger Natronlauge auf einen Wert von 5,5 eingestellt. Nach weiterer Abkühlung auf 20°C wurde das Riboflavin-5'-phosphat-natriumsalz analog zu Beispiel 1B abgetrennt, gewaschen und getrocknet.

Man erhielt 119 g (entsprechend 78 % der Theorie) eines Produktes, das mit einer durchschnittlichen Teilchengröße von nur 10 µm sehr schlecht filtrierbar war.

Gemäß HPLC-Analyse analog zu Beispiell hatte das Produkt folgende Zusammensetzung:

| | |
|---|---|
| 1,5 % | Riboflavin 3',5'-diphosphat |
| 2,4 % | Riboflavin 4',5'-diphosphat |
| 5,1 % | Riboflavin 3'-monophosphat |
| 11,3 % | Riboflavin 4'-monophosphat |
| 70,6 % | Riboflavin 5'-monophosphat |
| 3,8 % | freies Riboflavin |
| 5,2 % | Wasser |

**Patentansprüche**

1. Verfahren zur Herstellung von leicht filtrierbarem, grobkristallinem Riboflavin-5'phosphat-mononatriumsalz durch Umsetzen von Riboflavin oder seinem Natriumsalz mit überschüssigem Phosphoroxichlorid in einem geeigneten organischen Lösungsmittel, Hydrolysieren des erhaltenen Reaktionsgemisches durch Behandeln mit Wasser bei

erhöhter Temperatur, Umsetzen des bei der Hydrolyse erhaltenen Reaktionsgemisches mit einer Natrium enthaltenden Base bis zu einem pH-Wert von 4,0 bis 6,0 und Isolieren des auskristallisierenden Riboflavin-5'-phosphatnatriumsalzes, dadurch gekennzeichnet, daß man das bei der Hydrolyse erhaltene Reaktionsgemisch bei Temperaturen von 55 bis 100°C mit der Natrium enthaltenden Base umsetzt, wobei das umzusetzende Riboflavin-5'-phosphat völlig im Reaktionsgemisch gelöst ist.

2. Verfahren zur Herstellung von leicht filtrierbarem, grobkristallinem Riboflavin-5'-phosphat-mononatriumsalz, durch Umsetzen von Riboflavin in γ-Butyrolacton mit 1,2 bis 3 mol Phosphoroxychlorid pro mol Riboflavin, hydrolysieren des so erhaltenen Reaktionsgemisches durch Behandeln mit 30 bis 50 mol Wasser pro Mol Vitamin $B_2$ bei Temperaturen zwischen 70 und 90°C und Umsetzen des bei der Hydrolyse erhaltenen Reaktionsgemisch mit Natriumhydroxid bis zu einem pH-Wert zwischen 5 und 6 und Abtrennen des auskristallisierenden Riboflavin-5'-phosphatnatriumsalzes, dadurch gekennzeichnet, daß man das bei der Hydrolyse erhaltene, Riboflavin-5'-phosphat gelöst enthaltende Reaktionsgemisch bei Temperaturen von 55 bis 100°C mit dem Natriumhydroxid umsetzt.

3. Verfahren gemäß Anspruch 2, dadurch gekennzeichnet, daß man das bei der Hydrolyse erhaltene, Riboflavin-5'-phosphat gelöst enthaltende Reaktionsgemisch bei Temperaturen von 55 bis 100°C mit Natriumhydroxid bis zu einem pH-Wert von 4,0 bis 5,0 umsetzt.

## Claims

1. A process for preparing large-crystalline riboflavin 5'-phosphate monosodium salt which is easy to filter by reacting riboflavin or its sodium salt with excess phosphorus oxychloride in a suitable organic solvent, hydrolyzing the resulting reaction mixture by treating with water at elevated temperature, reacting the reaction mixture obtained in the hydrolysis with a sodium-containing base until the pH is from 4.0 to 6.0 and isolating the riboflavin 5'-phosphate sodium salt which crystallizes out, wherein the reaction mixture obtained in the hydrolysis is reacted with the sodium-containing base at from 55 to 100°C, the riboflavin 5'-phosphate to be reacted being completely dissolved in the reaction mixture.

2. A process for preparing large-crystalline riboflavin 5'-phosphate monosodium salt which is easy to filter by reacting riboflavin in γ-butyrolactone with from 1.2 to 3 mol of phosphorus oxychloride per mol of riboflavin, hydrolyzing the resulting reaction mixture by treating with from 30 to 50 mol of water per mol of vitamin $B_2$ at from 70 to 90°C and reacting the reaction mixture obtained in the hydrolysis with sodium hydroxide until the pH is from 5 to 6, and separating off the riboflavin 5'-phosphate sodium salt which crystallizes out, wherein the reaction mixture containing dissolved riboflavin 5'-phosphate obtained in the hydrolysis is reacted with the sodium hydroxide at from 55 to 100°C.

3. A process as claimed in claim 2, wherein the reaction mixture containing dissolved riboflavin 5'-phosphate obtained in the hydrolysis is reacted at from 55 to 100°C with sodium hydroxide until the pH is from 4.0 to 5.0.

## Revendications

1. Procédé pour la préparation de sel monosodique de riboflavine-5'-phosphate en gros cristaux, aisément filtrable, par réaction de riboflavine ou de son sel de sodium avec de l'oxychlorure de phosphore en excès dans un solvant organique approprié, hydrolyse du mélange réactionnel obtenu par traitement avec de l'eau à température élevée, réaction du mélange réactionnel obtenu lors de l'hydrolyse avec une base contenant du sodium jusqu'à une valeur de pH de 4,0 à 6,0, et isolement du sel sodique de riboflavine-5'-phosphate qui cristallise, caractérisé par le fait qu'on fait réagir le mélange réactionnel obtenu lors de l'hydrolyse à des températures de 55 à 100°C avec la base contenant du sodium, tandis que le riboflavine-5'-phosphate à faire réagir est totalement dissous dans le mélange réactionnel.

2. Procédé pour la préparation de sel monosodique de riboflavine-5'-phosphate en gros cristaux, aisément filtrable, par réaction de riboflavine dans de la γ-butyrolactone avec 1,2 à 3 mol d'oxychlorure de phosphore par mol de riboflavine, hydrolyse du mélange réactionnel ainsi obtenu par traitement avec 30 à 50 mol d'eau par mol de vitamine $B_2$ à des températures comprises entre 70 et 90°C, et réaction du mélange réactionnel obtenu lors de l'hydrolyse avec de l'hydroxyde de sodium jusqu'à une valeur de pH entre 5 et 6, et séparation du sel sodique de riboflavine-5'-phosphate qui cristallise, caractérisé par le fait qu'on fait réagir le mélange réactionnel obtenu lors de l'hydrolyse, contenant du riboflavine-5'-phosphate dissous, à des températures de 55 à 100°C avec l'hydroxyde de sodium.

3. Procédé selon la revendication 2, caractérisé par le fait qu'on fait réagir le mélange réactionnel obtenu lors de l'hydrolyse, contenant du riboflavine-5'-phosphate dissous, à des températures de 55 à 100°C avec de l'hydroxyde de sodium jusqu'à une valeur de pH de 4,0 à 5,0.